# FASCICULE DE BREVET EUROPEEN

(11) **EP 0 544 660 B1**
(45) Date de publication et mention de la délivrance du brevet: **01.06.1994**
(21) Numéro de dépôt: 90913284.7
(22) Date de dépôt: 20.08.1990
(51) Int. Cl.: B65F 1/00, B65F 1/14

(54) **PROCEDE DE LUTTE CONTRE LA POLLUTION DE L'ENVIRONNEMENT PAR DES REBUTS, ET UNITE DE COLLECTE POUR LA MISE EN OEUVRE DE CE PROCEDE**
VERFAHREN UND VORRICHTUNG ZUM VERHINDERN VON UMWELTVERSCHMUTZUNG DURCH MÜLL SOWIE SAMMELEINRICHTUNG ZUR DURCHFÜHRUNG DES VERFAHRENS
PROCESS FOR COMBATTING POLLUTION OF THE ENVIRONMENT CAUSED BY REFUSE MATERIAL, AND COLLECTING DEVICE FOR CARRYING OUT SAID METHOD

(43) Date de publication de la demande: 09.06.1993
(73) Titulaire: DRU, Françoise, F-92320 Châtillon (FR)
(72) Inventeur: DRU, Françoise, F-92320 Châtillon (FR)
(86) Numéro de dépôt international: FR9000616
(87) Numéro de publication internationale: WO9203360

(56) Documents cités:
- EP-A- 0 006 242
- DE-U- 8 806 095
- FR-A- 2 643 617
- GB-A- 2 224 922

## Description

La présente invention concerne un procédé de lutte contre la pollution de l'environnement par des rebuts, et un dispositif pour la mise oeuvre de ce procédé, selon la première partie des revendications 1 et 12 (par exemple GB-A-2 224 922).

En dépit des campagnes de propreté et de protection de l'environnement, et malgré la mise en place d'unités de collecte de rebuts de plus en plus nombreuses à la disposition du public, force est de constater que les lieux publics, en particulier au voisinage des commerces distribuant des produits alimentaires "à emporter", sont de plus en plus sales. Le phénomène n'épargne pas les salles de spectacles dont le sol même, après une séance, est jonché de petits rebuts divers (bâtons et sachets de crème glacés, papiers de bonbons, tickets, etc...), ni par exemple les hippodromes où les tickets de pari usagés finissent plus souvent sur les pelouses que dans les corbeilles à papier.

Il s'ensuit un enlaidissement général de l'environnement, une atteinte à l'hygiène dans le cas de déchets alimentaires (os de poulet, par exemple) et un budget de nettoyage considérable.

Il serait donc souhaitable d'inciter la part du public qui est responsable de cette situation, et manisfestement insensible à l'intérêt de la collectivité, à utiliser néanmoins les unités de collecte de rebuts, et pour ce faire que cette part du public y trouve son intérêt personnel et immédiat.

C'est le but que s'est fixé l'invention, but qui est atteint en ce sens qu'elle propose un procédé qui consiste à munir lesdites unités, de première part, de moyens adaptés à identifier au moins grossièrement un rebut présenté à, ou introduit dans, ledit orifice d'accès, de deuxième part, de moyens convoyeurs dudit rebut au-delà de l'orifice d'accès et, de troisième part, de moyens adaptés à délivrer et valider une preuve de dépôt, telle qu'un ticket cadeau, en rapport avec le rebut, après identification positive par lesdits moyens d'identification en combinaison éventuelle avec lesdits moyens convoyeurs.

Les moyens d'identification ont pour fonction d'éviter que n'importe quel objet puisse être introduit dans l'unité de collecte et donner lieu à une preuve de dépôt. Ils dépendront du type de rebuts auquel est destinée l'unité de collecte, type qui est lui-même fonction de l'implantation de ladite unité. Ils pourront également dépendre d'autres objectifs comme la collecte de rebuts précis quant à leur origine ou à leur nature, ainsi qu'on le verra plus loin.

La preuve de dépôt pourra être, par exemple, une fraction d'entrée gratuite dans une salle de cinéma ou dans un hippodrome, un bon de réduction sur l'achat d'un produit de la même origine que celle du rebut déposé, etc..

Dans une première forme d'exécution de l'invention, l'identification du rebut se fait, au moins partiellement, par comparaison entre une dimension d'au moins une partie du rebut et celles dudit orifice d'accès. Ce type d'identification évite que des objets dont l'encombrement ne correspond évidemment pas au type de rebuts attendus puissent être introduits dans l'unité de collecte.

Dans le cas de produits consommables donnant des déchets de faible épaisseur, tels que ceux souillant habituellement le sol des salles de spectacles ainsi les tickets de pari dans les hippodromes, le procédé selon l'invention propose de joindre, au produit consommable vendu, un sachet adapté à recueillir le conditionnement dudit produit et/ou les déchets résultants du produit après consommation, et il est caractérisé en ce qu'il consiste à prévoir sur ledit sachet ladite preuve de dépôt et à munir l'unité de collecte de moyens de séparation, de marquage et de restitution de ladite preuve de dépôt, lesquels moyens agissent sur le sachet tandis qu'il est introduit et/ou convoyé dans l'unité de collecte.

On comprend que, dans ce cas, c'est un fragment du sachet qui sert de preuve de dépôt. Pour éviter les fraudes, le sachet pourra être indéchirable à la main (sachet en non tissé avec éventuellement des fibres de renforcement). Le marquage effectué par l'unité de collecte pourra être un compostage, une perforation ou une trace caractéristique laissée par les moyens de séparation et il confirmera que la preuve de dépôt a bien été délivrée par l'unité de collecte.

Dans le cas de rebuts plus volumineux, tels que les bôites métalliques ayant contenu une boisson, que dans la suite on appellera "cannettes", ou les emballages parallèlépipédiques rectangles en carton chemisé intérieurement d'une feuille métallique, que dans la suite on appellera "briquettes", il est possible de se passer de l'utilisation d'un sachet collecteur et de procéder à des identifications plus spécifiques.

Ainsi, dans de telles applications, l'identification du rebut pourra consister en une reconnaissance d'une propriété d'un matériau composant le rebut, telle que son caractère magnétique ou amagnétique. Elle pourra également consister en une reconnaissance d'une section standard du rebut. L'identification du rebut pourra encore être précisée en croisant les deux informations.

L'identification pourra être affinée davantage par la lecture de la couleur dominante du rebut et/ou celle d'un code à barres porté par le rebut.

Il peut toutefois suffire que l'identification ne porte que sur une caractéristique si l'objectif est de procéder à une récupération d'une certaine catégorie de rebuts recyclables, par exemple des rebuts magnétiques.

Dans ce cas, selon l'invention, l'identification du rebut se fait préalablement à un tri en rebuts reconnus et acceptés pour collecte dans un conteneur principal et en rebuts non reconnus et dérivés vers un conteneur secondaire, seuls les rebuts acceptés étant pris en compte pour la délivrance de la preuve de dépôt.

L'invention étend sa portée à une unité de collecte pour la mise en oeuvre du procédé selon l'invention.

D'autres avantages et caractéristiques avantageuses de l'invention ressortiront de la description qui va suivre, faite en référence aux dessins annexés dans lesquels :
- la figure 1 est une vue en perspective de la partie supérieure d'une unité de collecte selon l'invention, adaptée à recueillir des rebuts de faible épaisseur, sous sachet.
- les figures 2a-2c sont des vues schématiques du dessus de la partie opérationnelle, ou bloc opérationnel, de l'unité de la figure 1, montrant trois phases de traitement d'un sachet de rebuts avec éjection d'une preuve de dépôt,
- les figures 3a-3b sont des coupes prises respectivement selon la ligne III-III des figures 2a-2c,
- la figure 4 est une vue de dessus du bloc opérationnel d'une unité de collecte adaptée à recueillir des cannettes,
- la figure 5 est une vue en coupe schématique prise selon la ligne IV-IV de la figure 4,
- la figure 6 est une vue de dessus du bloc opérationnel d'une unité de collecte adaptée à recueillir des briquettes,
- la figure 7 est une vue en coupe schématique prise selon la ligne VI-VI de la figure 6, et

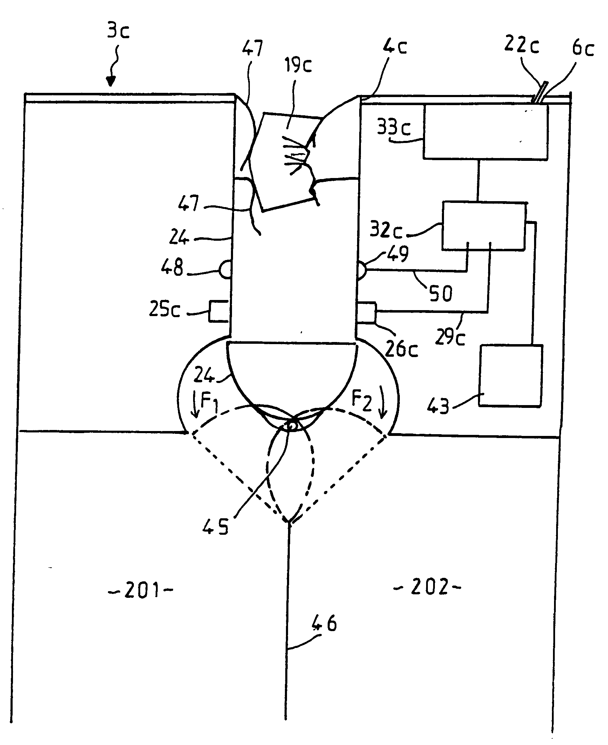

- la figure 8 est une vue en coupe schématique du bloc opérationnel d'une unité de collecte et de tri pour la récupération de rebuts recyclables.

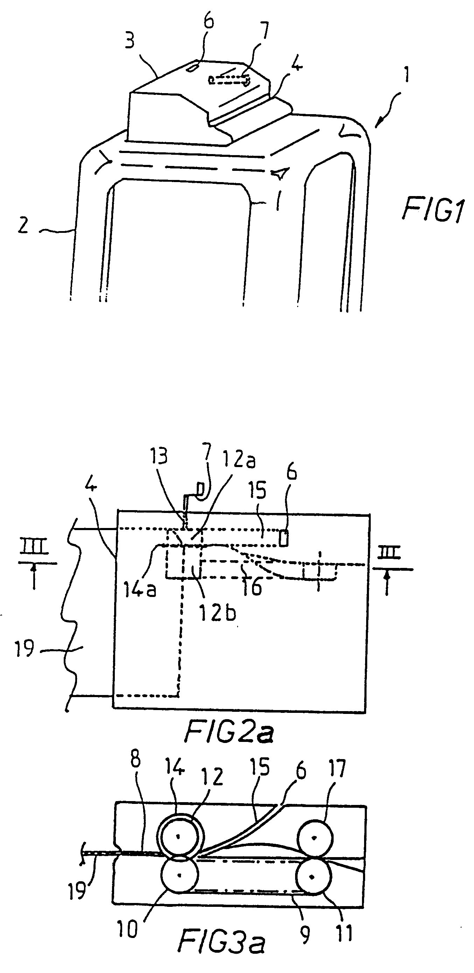

Si l'on se réfère à la figure 1, on voit une unité de collecte de rebuts, désignée dans son ensemble par 1, formée d'un conteneur 2 surmonté d'un bloc opérationnel 3. Ce dernier présente une fente 4 d'accès ou d'introduction pour un sachet de rebuts, une fente 6 d'éjection de preuve de dépôt et une manette ou manivelle d'actionnement 7 latérale. La largeur de la fente d'accès 4 est trop faible pour que l'on puisse y introduire les doigts.

Comme il ressort des figures 2a et 3a, le bloc 3 détermine une voie 8 de transport du sachet 19 de rebuts dont une partie est constituée d'un convoyeur sans fin 9 tendu sur des cylindres 10̸ et 11. Le cylindre 10̸ est en appui contre un cylindre d'entraînement 12 sur l'axe de rotation 13 duquel aqit la manivelle 7. Ce cylindre d'entraînement 12 est, en fait, en deux parties 12a et 12b entre lesquelles est bloqué un couteau circulaire 14 à lame ondulée 14a.

Au delà des cylindres 10̸ et 12, la voie 8 se scinde en une voie d'éjection 15 faisant suite au cylindre 12a et une voie de collecte 16 faisant suite au cylindre 12b. La voie d'éjection 15 débouche à l'extérieur du bloc 3 par la fente 6, tandis que la voie de collecte 16 aboutit entre le cylindre 11 et un cylindre presseur 17, en vis-à-vis, après avoir déterminé une rampe 18 de rabattage.

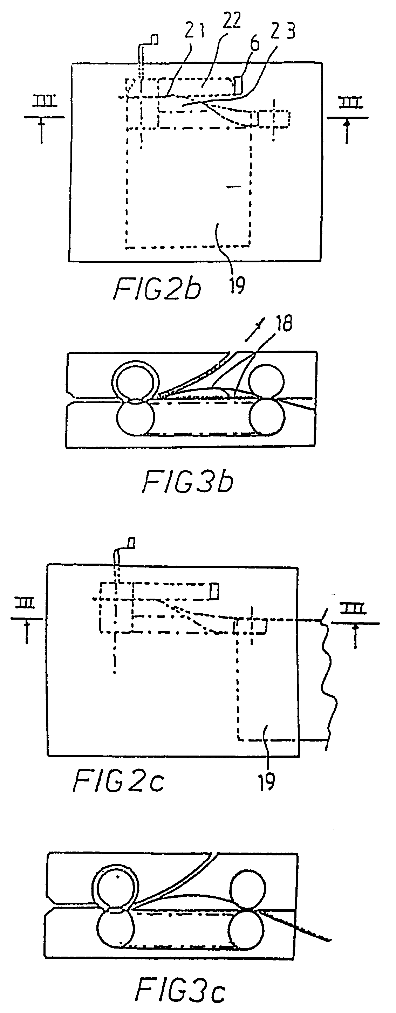

Le fonctionnement du dispositif est le suivant : un sachet 19, imprimé d'une mention "Bon pour..." (ou autre) dans la zone immédiatement voisine de son bord libre, est introduit dans le fente 4 avec son bord libre tourné vers la manivelle 7 jusqu'à ce qu'il vienne en butée contre les cylindres 10̸ et 12 (figures 2a et 3a). L'actionnement de la manivelle 7 entraîne en rotation ledit cylindre 12, donc le cylindre 10̸, le convoyeur 9 et du même coup les cylindres 11 et 17. La rotation des cylindres 10̸ et 12 happe le sachet entre eux, lequel sachet passe entièrement dans le fente 4 et est acheminé au delà desdits cylindres. Au passage, le couteau 14, qui est bloqué sur l'axe de rotation 13, tourne en même temps que lui en découpant le sachet 19 selon la ligne 21. Ce faisant, l'ondulation de son arête 14a laisse une marque caractéristique sur ladite ligne. La zone découpée 22 formant preuve de dépôt est déviée selon la voie d'éjection 15 et émerge à l'extérieur du bloc 3 par la fente 6. La zone 23 formant le nouveau bord libre du sachet 19 est, elle, contrainte de passer dans le système de rampe 18 qui la rabat sur elle-même avant qu'elle atteigne les cylindres 11 et 17 (figures 2b et 3b). Ces cylindres ont un effet presseur sur le rabat afin d'en marquer le pli et de refermer le sachet 19 avant qu'il ne soit évacué par une chute appropriée, non représentée, dans le conteneur 2 (figures 2c et 3c).

La simplicité et la robustesse de cette structure la rendent apte à être placée dans des lieux publics. Au lieu d'une manivelle tournant une ou plusieurs fois sur 360̸°, on pourrait avoir recours, moyennant une démultiplication appropriée, à un manette pivotant sur un angle inférieur ou égal à 180̸°. Dans un lieu protégé, le fonctionnement de la machine pourra être électrique. Par ailleurs, le couteau pourrait avoir une lame non ondulée, auquel cas le marquage serait fait à l'aide de moyens perforateurs ou composteurs prévus le long de la voie d'éjection 15.

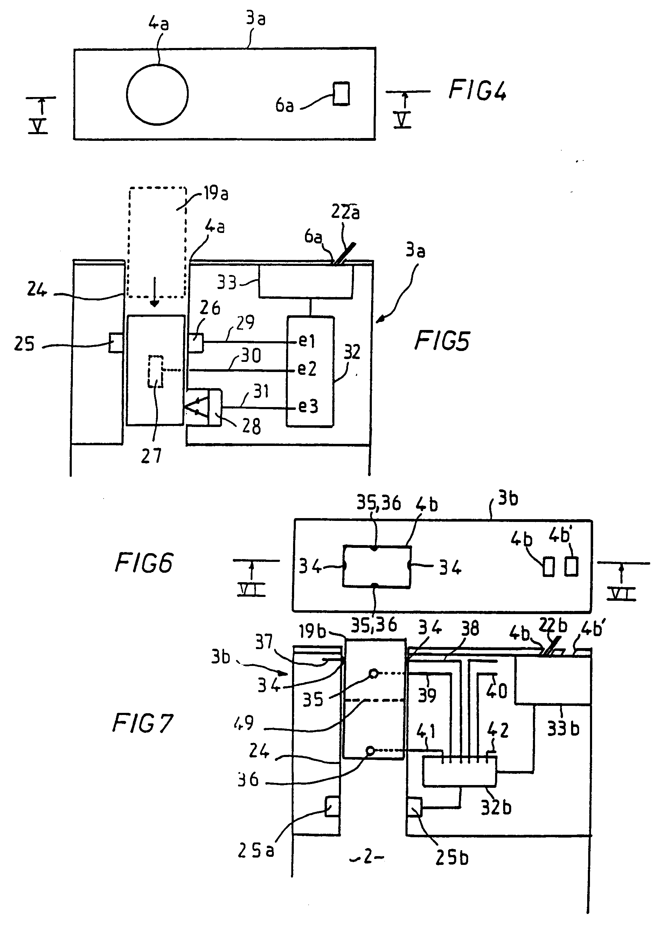

Le mode de réalisation illustré aux figures 4 et 5, dans lesquelles on utilisera les mêmes références qu'aux figures 1-3c pour désigner les mêmes pièces et les mêmes références, mais suivies de la lettre a pour désigner des pièces similaires, convient à la collecte de cannettes d'une certaine marque ayant une couleur dominante.

A cette fin, au lieu d'être en forme de fente, l'orifice d'accès 4a du bloc 3a est circulaire, avec un diamètre très faiblement supérieur au diamètre du ou des produits 19a dont la collecte est souhaitée, ce pour éviter que des rebuts dont la section présente une dimension supérieure au diamètre de l'orifice 4a puissent être introduits dans l'unité.

Le bloc 3a comporte un conduit de descente 24 qui débouche dans le conteneur 2. Le long de ce conduit de descente sont disposés un détecteur de métaux magnétiques, constitué d'un émetteur 25 et d'un récepteur 26, et deux lecteurs de couleurs 27 et 28. L'émetteur émet un champ que reçoit le récepteur, lequel enregistre toute pertubation de ce champ occasionnée par le passage d'un objet magnétique. Le lecteur de couleur envoie un faisceau lumineux et reçoit en retour le faisceau qui lui est réfléchi par tout objet passant devant lui. Il analyse le faisceau réfléchi et, selon l'absorption constatée, détermine si l'objet est de la couleur attendue au non.

Il est prévu deux détecteurs de couleurs disposés à 90̸° l'un de l'autre pour s'assurer que la couleur lue n'est pas celle d'une zone ponctuelle, mais bien une couleur dominante.

La sortie 29 du récepteur 26 fournit directement, ou via une interface connue en soi, un niveau logique "1" (par exemple) lorsqu'il constate que le rebut est magnétique et un niveau logique "O" s'il ne l'est pas.

De même, la sortie 30̸ et 31 des lecteurs de couleur 27 et 28 fournissent directement, ou via une interface connue en soi, un niveau logique "1" (par exemple) lorsqu'ils constatent respectivement que le rebut est rouge et un niveau logique "O" s'il ne l'est pas.

Les sorties 29-31 sont reliées à un circuit logique de commande 32 dont la sortie est reliée par une interface non représentée à un distributeur 33 de preuves de dépôt 22a.

Dans un mode de mise en oeuvre préféré, le circuit logique de commande 32 est une mémoire morte dont les entrées d'adressage e1-e3 sont reliées aux sorties 29-31. Cette mémoire peut être programmée de la façon suivante :
- si l'on a 111 comme signal d'entrée la mémoire 32 envoie au distributeur 33 l'ordre de délivrer une preuve de dépôt 22a par la fente 6a,
- pour tous les autres signaux d'entrée

0̸11 : matériau amagnétique ayant le rouge comme couleur dominante
0̸0̸1 ou 0̸10̸ : matériau amagnétique ayant une zone limitée rouge
110̸ ou 10̸1 : matériau magnétique ayant une zone limitée rouge
0̸0̸0̸ : matériau ni magnétique ni rouge
la mémoire n'envoie aucun ordre de délivrance au distributeur.

Il est bien entendu que le dispositif pourrait comporter davantage de lecteurs de couleurs si l'on veut augmenter la précision de la lecture et que les types détecteurs mentionnés plus haut, tant en ce qui concerne le caractère magnétique ou amagnétique du rebut, que sa couleur dominante, ne sont que des exemples parmi de nombreux autres possibles. En outre, la propriété détectée pourrait être autre que le caractère magnétique.

Le mode de réalisation illustré aux figures 6 et 7, dans lesquelles on utilisera les mêmes références qu'aux figures 1-5 pour désigner les mêmes pièces et les mêmes références, mais suivies de la lettre b pour désigner des pièces similaires, convient à la collecte de briquettes ayant la même section de base, mais pouvant être de deux hauteurs différentes, par exemple, une briquette d'un litre et une briquette d'un demi-litre dont le dépôt donne lieu à la distribution de deux preuves de dépôt différentes selon le modèle de briquettes.

A cette fin, l'orifice d'accès 4b du bloc 3b est rectangulaire et sa section est très faiblement supérieure à celle, standard, des briquettes 19b dont la collecte est souhaitée, pour la même raison que celle exposée ci-dessus.

Le bloc 3b comporte un conduit de descente 24 qui débouche dans le conteneur 2. Le long de ce conduit de descente sont disposées trois paires de palpeurs 34, 35 et 36. La paire de palpeurs 35 est décalée à 90̸° par rapport à la paire de palpeurs 34 pour s'assurer que le rebut a bien une section correspondant à la section standard. La distance entre la paire de palpeurs 34 et 36 est telle que seule une briquette 19b de grand format peut les toucher simultanément.

Les sorties 37, 38 de la paire de palpeurs 34, celles 39, 40̸ de la paire de palpeurs 35 et celles 41, 42 de la paire de palpeurs 36 fournissent directement, ou via une interface connue en soi, un niveau logique "1" (par exemple) lorsqu'ils sont touchés par le rebut 19b au cours de sa chute dans le conduit 24 et un niveau logique "O" s'ils ne le sont pas.

Les sorties 37-42 sont reliées à un circuit logique de commande 32b dont la sortie est reliée par une interface non représentée à un distributeur 33b de preuves de dépôt 22b ou 22b′.

Dans un mode de mise en oeuvre préféré, le circuit logique de commande 32b est une mémoire morte dont les entrées d'adressage sont reliées aux sorties 37-42. Cette mémoire peut être programmée de la facon suivante :
- si l'on a 111111 comme signal d'entrée la mémoire 32b envoie au distributeur 33b l'ordre de délivrer une preuve de dépôt de briquette grand format 22b, par la fente 4b,
- si l'on a 11110̸0̸ comme signal d'entrée la mémoire 32b envoie au distributeur 33b l'ordre de délivrer une preuve de dépôt de briquette petit format, par la fente 4b′ (une telle briquette de petit format correspondant à la partie supérieure de la briquette 19b telle que limitée par le fond en pointillés 49 à la figure 7)
- si l'on a 0̸0̸1111 comme signal d'entrée, ce qui se produit lors du contact simultané des paires de palpeurs 35 et 36 par une briquette de arand format après qu'elle ait dépassé la paire de palpeurs 34, ou même par une briquette de petit format si ces paires de palpeurs 35 et 36 sont suffisamment rapprochées, la mémoire 32b n'envoie aucun ordre au distributeur,
- pour tous les autres signaux d'entrée, tels que

110̸0̸0̸0̸ ou 0̸0̸1111 : rebut ayant une dimension correspondant respectivement à la largeur ou à la longueur de la section standard attendue, mais non aux deux
10̸0̸10̸0̸, 0̸110̸0̸1, etc : rebut de forme irrégulière, rebut de petite section heurtant une paroi puis l'autre du conduit, etc.
la mémoire 32b n'envoie aucun ordre non plus au distributeur de preuve de dépôt.

Il est bien entendu que ce mode de réalisation pourrait comprendre également un détecteur de la nature d'un matériau constitutif du rebut tel que l'ensemble 25a, 25b dont le signal de sortie serait combiné aux signaux précités. Il pourrait ne délivrer de preuve de dépôt que pour un format de briquette donné, auquel cas la paire de palpeurs 35 et la fente 4b′ seraient supprimées. Le distributeur 33b pourrait également distribuer des preuves de dépôts pour petit et grand formats par une seule et même fente.

Au lieu d'être adaptée à accepter des briquettes de section rectangulaire standard mais de capacité - donc de hauteur - différente, l'unité selon l'invention pourraît être conçue pour accepter, par exemple, des briquettes de même capacité, mais de section rectangulaire différente, une dimension de cette section étant toutefois commune aux différentes briquettes, dites de "petite" et de "grande" sections. Dans ce cas, l'ouverture 4b aurait deux de ses côtés opposés, dits "côtés d'écartement standard", dont la longueur correspondrait à cette dimension commune, au jeu d'introduction près, la longueur des côtés opposés de l'ouverture étant choisie de façon à permettre l'introduction aussi bien des briquettes de petite section que de grande section. Dans ce cas également, les palpeurs pourraient n'être disposés que le long des parois du conduit 24 qui prolongent les côtés d'écartement standard, si l'on ne cherche pas à distinguer, dans l'identification, les briquettes de petite section de celles de grande section.

Le mode de réalisation de la figure 7 applique le procédé incitatif selon l'invention au dépôt de rebuts recyclables d'un certain type.

Comme précédemment, on utilisera les mêmes références qu'aux figures 1-5 pour désigner les mêmes pièces et les mêmes références, mais suivies de la lettre c pour désigner des pièces similaires.

Cette fois la forme et les dimensions de l'orifice d'accès 4c du bloc 3c ne sont pas liées à une forme de produit puisque l'on cherche à collecter des produits ayant en commun la nature d'un de leurs constituants, par exemple des boîtes de conserve métalliques de tout format dans n'importe quel état, telles que la cannette cabossée 19c. L'orifice d'accès 4c sera donc relativement grand. Comme dans le cas du mode de réalisation des figures 4 et 5, le conduit de descente 24 est muni d'un émetteur 25c et d'un récepteur 26c dont la sortie 29c est reliée à une mémoire morte 32c, elle-même reliée par une interface non représentée, à un distributeur 33c de preuve de dépôt 22c et à un moteur 43. Le conduit 24 est en outre muni d'un détecteur de passage, constitué par exemple par une cellule photoélectrique 48, 49, la sortie 50̸ du récepteur 49 étant, elle aussi, reliée à la mémoire morte 32c. Comme le voit, à l'aplomb du conduit de descente 24 est situé un bac 44 bloqué sur un axe de rotation 45 commandé par le moteur 43. Au dessous de l'axe de rotation 45 se trouve une cloison 46 séparant un conteneur principal 20̸1 d'un conteneur secondaire 20̸2. Pour éviter les fraudes, les émetteur 25c et récepteur 26c sont suffisamment éloignés de l'orifice 4c et un dispositif à sens unique de passage 47 équipe ledit orifice.

Lorsque la mémoire morte reçoit le signal d'entrée 11 (passage d'un matériau magnétique), elle commande au distributeur 33c la distribution d'une preuve de dépôt 22c, par la fente 6c, et la rotation du moteur 43 de façon à faire tourner l'axe 45 dans le sens de la flèche F1 : le bac se vide alors du rebut 19c qu'il a reçu dans le conteneur 20̸1. Lorsque la mémoire morte reçoit le signal d'entrée 10̸ (passage d'un matériau amagnétique), elle n'envoie aucun ordre au distributeur 33c, mais commande la rotation du moteur 43 de façon à faire tourner l'axe 45 dans le sens de la flèche F2 : le bac se vide alors du rebut 19c dans le conteneur 20̸2.

## Revendications

1. Procédé de lutte contre la pollution de l'environnement par des rebuts (I9,I9a-I9c), notamment des conditionnements de produits consommables tels que les produits alimentaires "à emporter" ou des tickets usagés, selon lequel il est mis à la disposition du public des unités de collecte pour le dépôt desdits rebuts (I9,I9a-I9c), lesquelles unités comportent un orifice d'accès (4, 4a-4c), caractérisé en ce qu'il consiste à munir lesdites unités, de première part, de moyens adaptés à identifier au moins grossièrement un rebut présenté à, ou introduit dans, ledit orifice d'accès (4,4a-4c), de deuxième part, de moyens convoyeurs (9,24) dudit rebut (I9, I9a-I9c) au-delà de l'orifice d'accès (4, 4a-4c) et, de troisième part, de moyens (I4, I5, 33a-33c) adaptés à délivrer et valider (22, 22a-22c) une preuve de dépôt, telle qu'un ticket-cadeau, en rapport avec le rebut, après identification positive par lesdits moyens d'identification en combinaison éventuelle avec lesdits moyens convoyeurs.

2. Procédé selon la revendication I, caractérisé en ce que l'identification du rebut (I9, I9a-I9c) se fait, au moins partiellement, par comparaison entre une dimension d'au moins une partie du rebut (I9, I9a-I9c) et celles dudit orifice d'accès (4, 4a-4c).

3. Procédé selon la revendication I ou 2, selon lequel il est joint au produit consommable vendu, un sachet (I9) adapté à recueillir le conditionnement dudit produit et/ou les déchets résultants du produit après consommation, caractérisé en ce qu'il consiste à prévoir sur ledit sachet la preuve de dépôt telle que le ticket-cadeau (22) et à munir l'unité de collecte d'un moyen de séparation (I4) et de marquage (I4a) et d'un moyens de restitution (I5, 6) de la preuve de dépôt telle que le ticket-cadeau validé (22), lesquels moyens agissent sur le sachet (I9) tandis qu'il est introduit et/ou convoyé dans l'unité de collecte.

4. Procédé selon la revendication 3 caractérisé en ce que le moyen de marquage (I4a) laisse une perforation, un compostage ou une trace caractéristique pour identification du dépôt rebut.

5. Procédé selon l'une des revendications 3 ou 4, caractérisé en ce que le moyen de séparation (I4) sert aussi de moyen de marquage de la preuve de dépôt telle que le ticket-cadeau.

6. Procéde selon l'une quelconque des revendications 3, 4 ou 5, caractérisé en ce que le moyen de séparation (I4) qui sert aussi de moyen de marquage (I4a) de la preuve de dépôt telle que du ticket-cadeau, est un couteau circulaire (I4) à lâme ondulée (I4a).

7. Procédé selon l'une des revendications I à 6, caractérisé en ce que l'identification du rebut I9a-c) consiste en une reconnaissance d'une propriété d'un matériau composant le rebut (I9a-c).

8. Procéde selon la revendication 7, caractérisé en ce que la propriété identifiée est le caractère magnétique ou amagnétique du rebut (I9a-c) ou une autre propriété détectable du rebut, telle que la conductivité.

9. Procédé selon l'une quelconque des revendications I à 8, caractérisé en ce que l'identification du rebut (I9b) consiste en une reconnaissance d'une section standard du rebut (I9b).

10. Procédé selon l'une quelconque des revendications I à 9, caractérisé en ce qu'il comporte, en outre, une identification complémentaire par lecture de la couleur dominante du rebut (I9a).

11. Procédé selon l'une quelconque des revendications 4 à I0, caractérisé en ce que l'identification du rebut (I9c) se fait préalablement à un tri en rebuts (I9c) reconnus et acceptés pour collecte dans un conteneur principal (20I) et en rebuts non reconnus et dérivés vers un conteneur secondaire (202), seuls les rebuts (I9c) acceptés étant pris en compte poor la délivrance de la preuve de dépôt telle qu'un ticket-cadeau (22c).

12. Unité de collecte pour la mise en oeuvre du procédé selon l'une quelconque des revendications I à 3, ayant un orifice d'accès (4, 4a, 4c), caractérisé en ce qu'il comporte, de première part, des moyens (4, 4a, 4c, 25, 25b, 25c, 26, 26b, 26c, 27, 28, 48, 49) adaptés à identifier au moins grossièrement un rebut (I9,I9a,I9c) présenté à, ou introduit dans, ledit orifice d'accès (4, 4a, 4c), de deuxième part, de moyens convoyeurs (9, 24) dudit rebut (I9, I9a-c) au-delà de l'orifice d'accès (4, 4a, 4c) et, de troisième part, de moyens (I4, I5, 6, 33, 33b, 33c) adaptés à délivrer une preuve de dépôt (22, 22a, 22c), telle qu'un ticket-cadeau, après identification positive par lesdits moyens d'identification en combinaison éventuelle avec lesdits moyens convoyeurs.

13. Unité de collecte selon la revendication I2, caractérisée en ce que la preuve de dépôt (22) telle un ticket-cadeau, est une partie d'un sachet (I9) dans lequel sont placés le ou les rebuts avant introduction dans l'orifice d'accès (4).

14. Unité de collecte selon la revendication I3, caractérisée en ce qu'elle comporte des moyens de séparation (I4), marquage (I4a) et de restitution (I5, 6) de ladite preuve de dépôt (22) telle que ticket-cadeau, lesquels moyens agissent sur le sachet (I9) tandis qu'il est introduit et/ou convoyé dans l'unité de collecte.

15. Unité de collecte selon la revendication I2 ou I3, caractérisée en ce qu'elle comporte un détecteur de matériaux magnétiques (25, 26, 25b, 26b) ou d'une autre propriété détectable telle que la conductivité.

16. Unité de collecte selon l'une quelconque des revendications I2, I4 et I5, caractérisée en ce qu'elle comporte un ensemble de palpeurs (34, 36) adaptés à contrôler une section standard et éventuellement une ou plusieurs longueurs standard.

17. Unité de collecte selon l'une quelconque des revendications I2, I4 à I6, caractérisée en ce qu'elle comporte au moins un lecteur de couleur (27, 28).

18. Unité de collecte selon l'une quelconque des revendications I3 et I4 à I7, caractérisée en ce qu'elle comporte au moins un lecteur de code à barres.

19. Unité de collecte selon l'une quelconque des revendications I3 à I8, caractérisée en ce qu'elle comporte, de première part, un conteneur principal (20I) de rebuts (I9c) reconnus et acceptés pour collecte et un conteneur secondaire (202) de rebuts non reconnus, de seconde part, des moyens de tri (44) entre ces deux conteneurs et, de troisième part, des moyens de commande (32c) reliés auxdits moyens d'identification, aux moyens adaptés à délivrer une preuve de dépôt telle qu'un ticket-cadeau et aux moyens de tri, lesdits moyens d'identification (25, 25b, 25c, 26, 26b, 26c, 48, 49) étant situés en amont des moyens de tri (44), vu dans le sens de transport du rebut (I9c), grâce à quoi, en fonction des informations reçues desdits moyens d'identification, lesdits moyens de commande (32c) ordonnent la délivrance d'une preuve de dépôt (22c) et l'orientation du rebut (I9c) vers le conteneur principal (20I), ou uniquement l'orientation du rebut vers le conteneur secondaire (202).

## Patentansprüche

1. Verfahren zur Vermeidung von Umweltverschmutzung durch Abfall (19, 19a-19c), insbesondere durch Konsumgüterverpackungen wie Essen zum Mitnehmen oder gebrauchte Eintritts- und sonstige Karten, gemäß dem der Öffentlichkeit Sammelbehälter mit einer Einwurföffnung (4, 4a-4c) zur Aufnahme dieser Abfälle (19, 19a -19c) bereitgestellt werden, dadurch gekennzeichnet, daß die Sammelbehälter erstens mit einer geeigneten Vorrichtung für die zumindest grobe Erkennung des in die Einwurföffnung (4, 4a-4c) gehaltenen bzw. eingeworfenen Abfalls, zweitens mit einer Weiterbeförderungsvorrichtung (9, 24) des Abfalls (19, 19a-19c) nach der Einwurföffnung (4, 4a-4c) und drittens mit geeigneten Vorrichtungen (14, 15, 33a-c) zur Ausgabe und Gültigkeitskennzeichnung eines abfallbezogenen Einwurfbelegs (22, 22a-22c) wie z. B. eines Geschenkbons nach positiver Erkennung des Abfalls durch die Erkennungsvorrichtung in eventueller Verbindung mit der Weiterbeförderungsvorrichtung versehen werden.

2. Verfahren nach Anspruch 1, dadurch gekennzeichnet, daß die Abfallerkennung (19, 19a-19c) zumindest teilweise durch Vergleich zwischen einer Abmessung von zumindest einem Teil des Abfalls (19, 19a-19c) und den Abmessungen der Einwurföffnung (4, 4a-4c) erfolgt.

3. Verfahren nach Anspruch 1 oder 2, gemäß dem einem verkauften Konsumgut eine Tüte (19) zur Aufnahme der Produktverpackung bzw. der nach Verbrauch anfallenden Abfälle beigegeben wird, dadurch gekennzeichnet, daß auf der Tüte der Einwurfbeleg (22), z. B. Geschenkbon, angebracht wird und die Sammelbehälter mit einer Abtrenn- (14), einer Markier- (14a) und einer Rückgabevorrichtung (15, 6) des Einwurfbelegs (22), wie eines gültigen Geschenkbons, versehen wird, wobei während des Einwerfens bzw. der Weiterbeförderung im Sammelbehälter die Tüte (19) von diesen Vorrichtungen bearbeitet wird.

4. Verfahren nach Anspruch 3, dadurch gekennzeichnet, daß die Markiervorrichtung (14a) eine zur Identifizierung des eingeworfenen Abfalls kennzeichnende Lochung, Stempelung oder Spur hinterläßt.

5. Verfahren nach Anspruch 3 oder 4, dadurch gekennzeichnet, daß die Abtrennvorrichtung (14) auch als Markiervorrichtung des Einwurfbelegs wie z. B. eines Geschenkbons dient.

6. Verfahren nach Anspruch 3, 4 oder 5, dadurch gekennzeichnet, daß die auch als Markiervorrichtung (14a) des Einwurfbelegs wie z. B. eines Geschenkbons dienende Abtrennvorrichtung (14) ein Rundmesser (14) mit welliger Schneide (14a) ist.

7. Verfahren nach Anspruch 1 - 6, dadurch gekennzeichnet, daß die Identifizierung des Abfalls (19a-c) in der Erkennung einer Materialeigenschaft des Abfalls (19a-c) besteht.

8. Verfahren nach Anspruch 7, dadurch gekennzeichnet, daß die erkannte Eigenschaft die magnetische oder nichtmagnetische Beschaffenheit des Abfalls (19a-c) oder eine andere erkennbare Eigenschaft des Abfalls, wie Leitfähigkeit, ist.

9. Verfahren nach Anspruch 1 - 8, dadurch gekennzeichnet, daß die Identifizierung des Abfalls (19b) in der Erkennung eines Standardquerschnitts des Abfalls (19b) besteht.

10. Verfahren nach Anspruch 1 - 9, dadurch gekennzeichnet, daß es außerdem eine Zusatzerkennung durch Erfassen der domininierenden Farbe des Abfalls (19a) besitzt.

11. Verfahren nach Anspruch 4 - 10, dadurch gekennzeichnet, daß nach Identifizierung des Abfalls (19c) ein Sortieren in erkannte und zum Sammeln in einem Hauptsammelbehälter (201) zulässige Abfälle (19c) und nicht erkannte und in einen Nebensammelbehälter (202) geleitete Abfälle erfolgt, wobei zur Ausgabe des Einwurfbelegs wie z. B. eines Geschenkbons (22c) nur die zugelassenen Abfälle (19c) berücksichtigt werden.

12. Sammelbehälter zur Durchführung des Verfahrens nach Anspruch 1 - 3 mit einer Einwurföffnung (4, 4a, 4c), dadurch gekennzeichnet, daß er erstens eine geeignete Vorrichtung (4, 4a, 4c, 25, 25b, 25c, 26, 26b, 26c, 27, 28, 48, 49) für die zumindest grobe Erkennung eines in die Einwurföffnung (4, 4a, 4c) gehaltenen bzw. eingeworfenen Abfalls (19, 19a, 19c), zweitens eine Weiterbeförderungsvorrichtung (9, 24) des Abfalls (19, 19a-c) nach der Einwurföffnung (4, 4a, 4c) und drittens eine geeignete Vorrichtung (14, 15, 6, 33, 33b, 33c) zur Ausgabe eines Einwurfbelegs (22, 22a, 22c) wie eines Geschenkbons nach positiver Erkennung des Abfalls durch die Erkennungsvorrichtung in eventueller Verbindung mit der Weiterbeförderungsvorrichtung besitzt.

13. Sammelbehälter nach Anspruch 12, dadurch gekennzeichnet, daß der Einwurfbeleg (22), z. B. ein Geschenkbon, Teil einer Tüte (19) zur Aufnahme des oder der Abfälle vor Einwurf in die Einwurföffnung (4) ist.

14. Sammelbehälter nach Anspruch 13, dadurch gekennzeichnet, daß er mit einer Abtrenn- (14), Markier- (14a) und einer Rückgabevorrichtung (15, 6) des Einwurfbelegs (22), wie z. B. eines Geschenkbons, versehen wird, wobei während des Einwerfens bzw. der Weiterbeförderung im Sammelbehälter die Tüte (19) von diesen Vorrichtungen bearbeitet wird.

15. Sammelbehälter nach Anspruch 12 oder 13, dadurch gekennzeichnet, daß er einen Magnetdetektor (25, 26, 25b, 26b) oder einen Detektor einer anderen erkennbaren Eigenschaft, wie Leitfähigkeit, besitzt.

16. Sammelbehälter nach Anspruch 12, 14 und 15, dadurch gekennzeichnet, daß er Meßfühler (34, 36) besitzt, mit denen ein Standardquerschnitt und eventuell eine oder mehrere Standardlängen erfaßt werden können.

17. Sammelbehälter nach Anspruch 12 und 14 - 16, dadurch gekennzeichnet, daß er zumindest ein Farblesegerät (27, 28) besitzt.

18. Sammelbehälter nach Anspruch 13 und 14 - 17, dadurch gekennzeichnet, daß er zumindest einen Strichcodeleser besitzt.

19. Sammelbehälter nach Anspruch 13 - 18, dadurch gekennzeichnet, daß er erstens einen Hauptsammelbehälter (201) für erkannte und zum Sammeln zugelassene Abfälle (19c) und einen Nebensammelbehälter (202) für nicht erkannte Abfälle, zweitens eine Vorrichtung (44) zum Sortieren zwischen diesen beiden Behältern und drittens eine mit der Identifizierungsvorrichtung, der Vorrichtung zur Ausgabe eines Einwurfbelegs wie z. B. eines Geschenkbons und mit der Sortiervorrichtung verbundene Steuerung (32c) besitzt, wobei die Identifizierungsvorrichtung (25, 25b, 25c, 26, 26b, 26c, 48, 49) in Beförderungsrichtung des Abfalls (19c) vor der Sortiervorrichtung liegt, wodurch die Steuerung (32c) je nach den von der Identifizierungsvorrichtung erhaltenen Daten entweder die Ausgabe des Einwurfbelegs (22c) und die Lenkung des Abfalls (19c) in den Hauptsammelbehälter (201) oder nur die Lenkung des Abfalls zum Nebensammelbehälter (202) bewirkt.

## Claims

1. Process for fighting against environmental pollution caused by waste (19, 19a-19c), and, in particular, consumer product packaging such as take-away food or tickets, according to which collection units are made available to the public for the deposit of the said waste (19, 19a-19c), the units of which include an access orifice (4, 4a-4c), wherein the said units are fitted, firstly, with means adapted to at least an approximate identification of the waste intended to be or actually introduced into, the said access orifice (4, 4a-4c), secondly, means of conveying (9 and 24) the said waste (19, 19a-19c) beyond the access orifice (4, 4a-4c) and, thirdly, means (14, 15 and 33a-33c) adapted to the issue and validation (22, 22a-22c) of a waste deposit slip, such as a gift-voucher, related to the waste, following positive identification, by the said means of identification in possible combination with the said means of conveying.

2. Process as claimed in claim 1, wherein the identification of the waste (19, 19a-19c) is performed, at least in part, by comparison of a dimension of at least one part of the waste (19, 19a-19c) and those of the said access orifice (4, 4a-4c).

3. Process as claimed in claims 1 or 2, wherein a bag 19 is added to the consumer product sold and adapted to enclosing the said product and/or waste resulting from its consumption, wherein the said bag already bears the waste deposit slip such as the gift-voucher (22), and the collection unit is fitted with means of separating (14), marking (14a), and returning (15 and 6) the waste deposit slip such as the validated gift-voucher (22), these said means all acting on the bag while it (19) is introduced and/or conveyed within the collection unit.

4. Process as claimed in claim 3, wherein the means of marking (14a) leaves a perforation, stamp or characteristic mark identifying the waste deposited.

5. Process as claimed in claims 3 or 4, wherein the means of separation (14) also acts as means of marking (14a) the waste deposit slip such as the gift-voucher.

6. Process as claimed in any of claims 3, 4 or 5, wherein the means of separation (14) which also acts as means of marking (14a) the waste deposit slip such as the gift-voucher is a circular knife (14) with a wavy blade (14a).

7. Process as claimed in any of claims 1 to 6, wherein identification of the waste (19a-c) consists in recognising a given property of the material making up the waste (19a-c).

8. Process as claimed in claim 7, wherein the property identified is the magnetic or non-magnetic nature of the waste (19a-c) or another detectable property of the waste, such as conductivity.

9. Process as claimed in any of the claims 1 to 8, wherein identification of the waste (19b) consists in recognising a standard section of the waste (19b).

10. Process as claimed in any of the claims 1 to 9, wherein it also includes further identification by detection of the predominant colour of the waste (19a).

11. Process as claimed in any of the claims 4 to 10, wherein identification of the waste (19c) is performed prior to sorting into recognised and accepted waste (19c) for collection in a primary container (201) and into non-recognised waste deviated into a secondary container (202), wherein only accepted waste (19c) is taken into consideration for the emission of the waste deposit slip such as a gift-voucher (22c).

12. Collection unit for implementation of the process as claimed in any of the claims 1 to 3, wherein the access orifice (4, 4a and 4c) includes, firstly, the means (4, 4a, 4c, 25, 25b, 25c, 26, 26b, 26c, 27, 28, 48 and 49) adapted to the approximate identification of the waste (19, 19a and 19c) presented to, or introduced into, the said access orifice (4, 4a and 4c), secondly, the means of conveying (9 and 24) the said waste (19, 19a-c) beyond the access orifice (4, 4a and 4c) and, thirdly, the means (14, 15, 6, 33, 33b and 33c) adapted to the issue of a waste deposit slip (22, 22a and 22c), such as a gift-voucher, following positive identification, by the said means of identification in possible combination with the said means of conveying.

13. Collection unit as claimed in claim 12, wherein the waste deposit slip (22) such as the gift-voucher is part of the bag (19) into which the said waste is placed prior to its introduction into the access orifice (4).

14. Collection unit as claimed in claim 13, wherein it includes the means of separating (14), marking (14a) and returning (15 and 6) the said waste deposit slip (22) such as the validated gift-voucher, these said means all acting on the bag (19) while it is introduced and/or conveyed within the collection unit.

15. Collection unit as claimed in claims 12 or 13, wherein it includes a detector of magnetic or non-magnetic materials (25, 26, 25b and 26b) or other detectable property, such as conductivity.

16. Collection unit as claimed in any of the claims 12, 14 and 15, wherein it includes a set of sensors (34 and 36) adapted to recognising a standard section and, possibly, one or more standard lengths.

17. Collection unit as claimed in any of the claims 12 and 14 to 16, wherein it includes at least one colour sensor (27 and 28).

18. Collection unit as claimed in any of the claims 13 and 14 to 17, wherein it includes at least one bar-code sensor.

19. Collection unit as claimed in any of the claims 13 to 18, wherein it includes, firstly, a primary container (201) for the collection of recognised and accepted waste (19c) and a secondary container (202) for non-recognised waste, secondly, the means of sorting (44) between these containers and, thirdly, means of providing instructions (32c) connected to the said means of identification, to the means adapted to the issue of a waste deposit slip such as a gift-voucher and to the means of sorting, of which the means of identification (25, 25b , 25c, 26, 26b, 26c, 48 and 49) are located before the means of sorting (44) in terms of waste (19c) transport, by which, according to the information received from the said means of identification, the said means of control (32c) instruct the issue of a waste deposit slip (22c) and the deviation of the waste (19c) into the primary container (201), or solely the deviation of the waste into the secondary container (202).
